# EUROPÄISCHE PATENTANMELDUNG

(11) **EP 0 930 122 A2**
(43) Veröffentlichungstag der Anmeldung: **21.07.1999**
(21) Anmeldenummer: 98121661.7
(22) Anmeldetag: 13.11.1998
(51) Int. Cl.: B23D 61/02

(54) **Kreissägeblatt mit unterschiedlichen Dicken mit fliessendem Übergang**

(30) Priorität: 14.11.1997 DE 19750538
(71) Anmelder: Röttger Jansen-Herfeld, 42824 Remscheid (DE)
(72) Erfinder: Jansen-Herfeld, Röttger Dipl.-Ing., 42853 Remscheid (DE)

(57) **Zusammenfassung**

Kreissägeblatt mit unterschiedlichen Dicken, die in ihren jeweiligen Bereichen gleich sind und einen Dickenübergang von einer zur anderen Dicke aufweisen, der mindestens 5 mm breit und in seiner radialen Veränderung etwa gleichförmig ist.

## Beschreibung

Die bekannten Kreissägeblätter mit unterschiedlichen Dicken weisen den Nachteil auf, daß die Übergänge stufenförmig sind, an denen sich das Sägemehl staut und durch die höhere Flächenpressung eine größere Temperatur aufgrund der Reibung entsteht.

Der Erfindung liegt die Aufgabe zugrunde, ein Sägeblatt zu schaffen, wo das Sägemehl partiell nicht gestaut wird und die Reibungserwärmungen gleichmäßig etwa über das Blatt radial verteilt sind.

Das erfindungsgemäße Sägeblatt weist unterschiedliche, in sich gleiche Dicken auf, die durch ringförmige Abschrägungen ineinander übergehen.

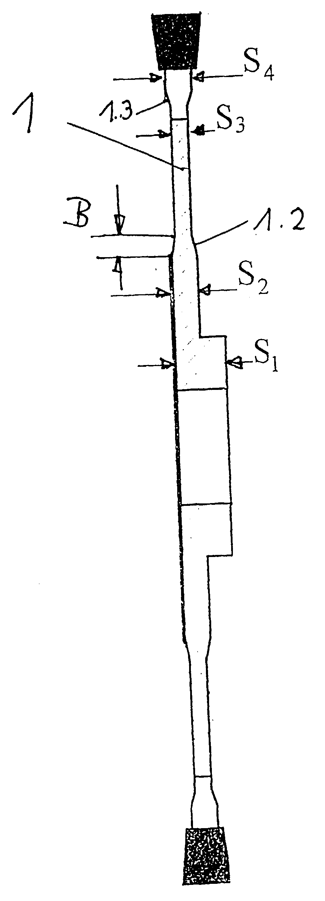

Die einzige Figur zeigt das erfindungsgemäße Sägeblatt (1) im Querschnitt mit den verschiedenen Dicken (S₁, S₂, S₃, S₄) und dem fließenden Übergang (1.3 bzw. 1.2) mit der Dickenübergangsbreite (B).

### Bezugszeichenliste

- 1: Sägeblatt
- B: Dickenübergangsbreite
- S₁: Sägeblattdicke
- S₂: Sägeblattdicke
- S₃: Sägeblattdicke
- S₄: Sägeblattdicke
- 1.2: Übergang
- 1.3: Übergang

## Patentansprüche

1. Kreissägeblatt mit unterschiedlichen in ihren jeweiligen Ringbereichen gleichen Dicken, dadurch gekennzeichnet, daß mindestens ein Übergang (1.2) von einer Dicke (z. B. S₃) zur anderen Dicke (z. B. S₂) eine Dickenübergangsbreite (B) von mindestens 5 mm aufweist und die radiale Dickenveränderung etwa stetig ist.
